# EUROPÄISCHE PATENTANMELDUNG

(11) **EP 3 361 094 A1**
(43) Veröffentlichungstag der Anmeldung: **15.08.2018**
(21) Anmeldenummer: 17155714.3
(22) Anmeldetag: 10.02.2017
(51) Int. Cl.: F03D 80/00, F03D 17/00

(54) **WINDENERGIEANLAGE SOWIE WINDPARK MIT MINDESTENS EINER SOLCHEN WINDENERGIEANLAGE**

(71) Anmelder: Nordex Energy GmbH, 22419 Hamburg (DE)
(72) Erfinder: Gunter, Fischer, 22529 Hamburg (DE)
(74) Vertreter: Hauck Patentanwaltspartnerschaft mbB

(57) **Zusammenfassung**

Windenergieanlage mit einem Turm und einem drehbar auf dem Turm (angeordneten Maschinenhaus, das einen drehbaren Rotor mit mehreren Rottorblättern trägt, wobei eine Vielzahl von Windsensoren an dem Turm angeordnet ist, wobei die Windsensoren ringförmig in mindestens zwei beabstandeten Ebenen an dem Turm angeordnet sind, die jeweils eine unterschiedliche Höhe an dem Turm aufweisen, wobei in den Ebenen jeweils mindestens drei über den Umfang des Turmes, verteilt angeordnete Windsensoren vorgesehen sind.

## Beschreibung

Die vorliegende Erfindung betrifft eine Windenergieanlage mit einem Turm und einem drehbar auf dem Turm angeordneten Maschinenhaus, das einen drehbaren Rotor mit mehreren Rotorblättern antreibt. Die Erfindung betrifft ebenfalls einen Windpark mit mindestens einer solchen Windenergieanlage.

Eine Windenergieanlage, alleinstehend oder in einem Windpark, entzieht einem Windstrom mit ihren Rotorblättern mechanische Leistung. Der Windstrom ändert, durch die Übertragung eines Impulses auf die Rotorblätter und das Umströmen von Rotorblättern, Turm und Maschinenhaus lokal seine Geschwindigkeit, seine Richtung sowie sein Strömungsverhalten.

Aus EP 2 402 603 B1 ist ein System bekannt geworden, mit dem ein Blattspitzenabstand zum Turm der Windenergieanlage induktiv gemessen werden kann. Der sogenannte Turmdurchgang des Rotorblatts erfolgt, wenn ein Rotorblatt sich in der sechs-Uhr-Position an dem Turm vorbeibewegt. Je nach Ausgestaltung des Rotorblatts und den Windverhältnissen besitzt die Rotorblattspitze einen variierenden Abstand zum Turm.

Aus WO2013/084276 A1 ist eine Windenergieanlage mit einem Turm bekannt geworden, die entlang dem Turm in einem von den Rotorblättern überdeckten Bereich Sensoren aufweist, die den Zustand der Oberfläche der Rotorblätter überwachen. Hierdurch können Veränderungen und Beschädigungen am Rotorblatt leicht und frühzeitig erkannt werden.

Aus EP 2 511 523 A1 ist eine Windenergieanlage bekannt geworden, die am Turm einen Abstandsmesser aufweist, der zur Überwachung des Abstandes zwischen Rotorblatt und Turm ausgelegt ist. Der Abstandsmesser befindet sich im Bereich einer Rotorblattspitze, wenn diese sich in ihrer sechs-Uhr-Position befindet.

Aus EP 2 598 750 B1 ist eine Windenergieanlage bekannt geworden, die eine Reihe von Druckmessgeräten aufweist, die entlang dem Turm der Windenergieanlage im Windschatten der Rotorblätter angeordnet sind. Die mit Hilfe der Drucksensoren gemessenen Werte zum Luftdruck können auch in Signale umgewandelt werden, die als Hinweis auf Windgeschwindigkeit und Windrichtung indikativ sind.

Der Erfindung liegt die Aufgabe zugrunde, eine Windenergieanlage bereitzustellen, die mit einfachen Mitteln Aufschluss über Strömungsverhältnisse in einem Windfeld an der Windenergieanlage gibt.

Erfindungsgemäß wird die Aufgabe durch eine Windenergieanlage mit den Merkmalen aus Anspruch 1 gelöst. Vorteilhafte Ausgestaltungen bilden die Gegenstände der Unteransprüche.

Die erfindungsgemäße Windenergieanlage umfasst einen Turm und ein drehbar auf dem Turm angeordnetes Maschinenhaus. Das Maschinenhaus beinhaltet eine Rotorwelle die außerhalb des Maschinenhauses mit einer Rotornabe abschließt, an der mehrere Rotorblätter um ihre Längsachse schwenkbar gelagert sind. Erfindungsgemäß ist eine Vielzahl von Windsensoren an dem Turm angeordnet, wobei die Windsensoren am äußeren Umfang des Turms ringförmig in mindestens zwei beabstandeten, bevorzugt horizontalen Ebenen angeordnet sind, die jeweils eine unterschiedliche Höhe am Turm aufweisen, wobei jede der besagten Ebenen mindestens drei über den Umfang des Turms, insbesondere gleichmäßig verteilte Windsensoren aufweist. Im Falle von genau drei Sensoren sind diese bei einer bevorzugt gleichmäßigen Verteilung jeweils um 120° versetzt angeordnet.

Bevorzugt sind sechs oder mehr Windsensoren am Turm in mehreren Ebenen gehaltert. Die Höhenangaben zu den beabstandeten Ebenen mit den Windsensoren gemäß der Erfindung sind bevorzugt auf die Geländeoberkante (GOK) bezogen. Die erfindungsgemäße Anordnung der Windsensoren am Turm der Windenergieanlage ermöglicht eine umfassende Messwerterfassung und davon ausgehend eine weitergehende Analyse über die am Turm herrschenden Windverhältnisse, wobei die die Windsensoren in den beabstandeten Ebenen jeweils Aufschluss über die Windgeschwindigkeit und/oder Windrichtungen in unterschiedlichen Höhen der Windenergieanlage geben. Bodennahe Windfelder können beispielsweise ein anderes Strömungsverhalten im Hinblick auf Richtung und Geschwindigkeit besitzen, als höherliegende Bereiche des Windfeldes. Auch gibt die Anordnung der Windsensoren - ringförmig über den Umfang des Turms verteilt - Aufschluss, welche Windverhältnisse auf einer dem Rotorblatt zugewandten Seite (Luv-Seite) und einer dem Wind abgewandten Seite (Lee-Seite) des Turms bestehen. Die so gewonnenen Daten geben Aufschluss über die Wechselwirkung zwischen Windenergieanlage und Luftströmung und erlauben somit auch eine optimierte Steuerung der Windenergieanlage.

In einer bevorzugten Ausgestaltung der Windenergieanlage sind die Windsensoren in mindestens einer unteren Ebene in einer Höhe angeordnet, die unterhalb der Rotorblattspitze in der sechs-Uhr-Stellung des Rotorblatts liegt. Der Abstand der Windsensoren wenigsten einer unteren oder der untersten Ebene zur Höhe der Rotorblattspitze in der sechs-Uhr-Stellung des Rotorblatts beträgt mindestens drei Meter, bevorzugt mindestens fünf Meter. Diese untere oder unterste Ebene liegt außerhalb des Rotorblattdurchlaufs und außerhalb des direkten Windschattens der Rotorblätter und gibt somit Aufschluss über die Windverhältnisse ohne oder mit nur sehr geringer Einwirkung durch die Rotorblätter. Eine Auswertung der Signale im Windschatten der Rotorblätter und außerhalb der Rotorblätter gibt zudem Aufschluss über die Veränderung der Luftströmung durch die Rotorblätter.

In einer bevorzugten Weiterbildung sind die Windsensoren in wenigstens drei beabstandeten, bevorzugt horizontal verlaufenden Ebenen innerhalb des Rotorblattdurchlaufs am Turm angeordnet und bilden mit den Windsensoren außerhalb des Rotorblattdurchlaufs ein räumliches Windsensor-Array.

Für die eingesetzten Windsensoren können bevorzugt optische Sensoren eingesetzt werden, die zur Messung von rückgestreuten elektromagnetischen Wellen ausgebildet sind, wie beispielsweise LIDAR-Sensoren oder auch eindimensionale Lasersysteme. Neben den optischen Windsensoren werden erfindungsgemäß besonders bevorzugt Ultraschall-Anemometer als Windgeschwindigkeitsmesser vorgesehen. Solche sind kostengünstig und überaus robust bei einer guten Messgenauigkeit verfügbar. Zweckmäßigerweise sind die Windsensoren in einer Ebene von gleicher Bauart. Es ist aber auch möglich, mehrere Bauarten in einer Ebene oder insgesamt zu mischen. Bei einer bevorzugten Ausgestaltung der Windenergieanlage misst jeder der Windsensoren kontinuierlich, zyklisch oder ereignisgesteuert Ist-Werte der lokalen Windgeschwindigkeiten und übermittelt die gemessenen Ist-Werte an eine Auswerteeinheit der Windenergieanlage, wobei die Auswerteeinheit ausgebildet und eingerichtet ist, eine Vielzahl von lokalen Ist-Werten der Windgeschwindigkeit, jeweils mit ihren zugeordneten Raumkoordinaten zu speichern. Das Speichern erfolgt vorzugsweise zyklisch und/oder ereignisgesteuert, insbesondere ansprechend auf einen Rotorblattdurchlauf.

Bevorzugt ist die Auswerteeinheit ausgebildet und eingerichtet, aus den lokalen Ist-Werten der Windgeschwindigkeiten und ihren jeweils zugeordneten Raumkoordinaten eine lokale Windrichtung zu bestimmen.

In einer besonders bevorzugten Weiterbildung ist die Auswerteeinheit ausgebildet und eingerichtet, um aus den lokalen Ist-Werten der Windgeschwindigkeit und ihren jeweils zugeordneten Raumkoordinaten Windfeldparameter für ein luv- und/oder leeseitiges Windfeld der Windenergieanlage zu ermitteln. Die Auswerteeinheit bestimmt somit aus der Vielzahl an Ist-Werten der Windgeschwindigkeit ein, insbesondere mehrdimensionales Geschwindigkeitsfeld für den Wind, das sich entlang dem Turm erstrecken kann. Die Ermittlung und/oder Abschätzung des leeseitigen Windfeldes kann einen besonders guten Indikator für einen Minimalabstand zu einer im Windschatten stehenden benachbarten Windenergieanlage liefern. Auch gibt die Abschätzung des leeseitigen Windfeldes Aufschluss über Wirbel und Impuls, die leeseitig in dem Windfeld enthalten sind.

In einer bevorzugten Weiterbildung ist die Auswerteeinheit ausgebildet und eingerichtet, aus den lokalen Ist-Werten der Windgeschwindigkeiten eine aerodynamische Unwucht durch beispielsweise eine ungleiche Blattstellung und/oder Vereisung der Rotorblätter im Turmdurchgang zu ermitteln. Von einer aerodynamischen Unwucht wird gesprochen, wenn die Rotorblätter aerodynamisch ein ungleiches Verhalten beim Turmdurchgang zeigen, obwohl sie für eine gleiche Winkelstellung angesteuert werden. Die aerodynamische Unwucht wird bevorzugt auf die 0°-Stellung der Rotorblätter bezogen, sodass der Fall vorliegt, dass die Rotorblätter bei einer aerodynamischen Unwucht keine gleiche 0°-Stellung besitzen, also jedes Rotorblatt in seiner 0°-Stellung bezogen auf seine durch die Rotation aufgespannte Ebene eine andere Drehung besitzt.

In einer Weiterentwicklung der Windenergieanlagen ist mindestens ein, bevorzugt jeder Windsensor durch eine Halteeinrichtung in einem vorbestimmten Abstand zur Turmaußenwand an dieser gehaltert. Mit Hilfe der Halteeinrichtung erfolgt die Messung der Windgeschwindigkeit in einem vorbestimmten Abstand von der Turmwand, sodass Staueffekte vermieden werden. Weiterhin sind um jeden Windsensor herum mindestens ein, vorzugsweise zwei Schutzbügel an der Turmwand befestigt und erstrecken sich um den Windsensor herum. Der oder die Schutzbügel können an der Turmwand oder Halteeinrichtung befestigt sein. Auch die Halteeinrichtung kann zu einem Schutzbügel geformt sein. Der oder die Schutzbügel sind bevorzugt so ausgeformt, dass sie wirksam verhindern, dass sich bei Montagearbeiten typischerweise verwendete Abseilvorrichtungen und persönliche Schutzausrüstung nicht an den Bügeln verfangen kann und der von ihnen überdeckte Sensor vor einem Kontakt mit solcher Ausrüstung geschützt ist. Durch diese Ausgestaltung wird insbesondere der Arbeitsschutz bei Montagearbeiten an der Windenergieanlage sichergestellt. Zudem wird sichergestellt, dass der Windsensor durch Montagearbeiten an der Windenergieanlage nicht beschädigt wird. Insbesondere bei Seilarbeiten, bei denen Seile entlang dem Turm hängen und bewegt werden, verhindern die Schutzbügel ein Verhaken der Seile an der Halteeinrichtung und dem Windsensor.

In einer bevorzugten Ausgestaltung sind die Windsensoren ausgebildet und eingerichtet, ihre gemessenen Werte drahtlos in das Innere des Turms zur Auswerteeinheit zu übertragen, wo diese dann empfangen und weiterverarbeitet werden. Mit der drahtlosen Übertragung kann vermieden werden, dass die Turmhülle durch Bohrungen für Kabeldurchführungen geschwächt wird.

In einer weiteren Ausgestaltung-sind die Windsensoren einer oder jeder Ebene mit ihren Halteeinrichtungen mittels eines Spannelements, insbesondere einer ringförmigen Spannschelle an dem Turm gehaltert, sodass keine Bohrungen in der Turmwandung für Verbindungsmittel erforderlich sind. Bevorzugt sind die Spannelemente horizontal an dem Turm gehaltert.

Auch können die Windsensoren in einer Ebene, die auch als Höhenring bezeichnet werden kann, mit der Turmwandung verklebt sein, ohne dass eine Bohrung in der Turmwandung vorgesehen ist.

In einer weiteren vorteilhaften Ausgestaltung werden die Halteeinrichtungen der Windsensoren in wenigstens einer Ebene durch Spannmagnete an der Turmaußenwand gehalten.

Werden Bohrungen in der Turmwandung für die Befestigung der Halteeinrichtungen der Windsensoren und/oder Kabeldurchführungen für notwendig erachtet, so können diese bevorzugt in dem Bereich der Flanschverbindung eines in Turmsektionen unterteilten Turms vorgesehen werden.

Die die Windsensoren jeweils aufnehmenden Ebenen sind bevorzugt horizontal angeordnet.

Die Windenergieanlage gemäß der Erfindung kann bevorzugt auch in einem Windpark eingesetzt werden, der eine Windparksteuerung umfasst, die mit der Auswerteeinheit der oder jeder Windenergieanlage zur Übermittlung der lokalen Ist-Werte der Windgeschwindigkeiten in Verbindung steht. Die Windparksteuerung gibt den Windenergieanlagen des Windparks Sollwerte für eine einzuspeisende Leistung vor. Die Ist-Werte der an der erfindungsgemäßen Windenergieanlage gemessenen Windgeschwindigkeiten, insbesondere der luv- und leeseitigen Windgeschwindigkeiten, können dabei von der Windparksteuerung mit ausgewertet werden.

Eine bevorzugte Ausgestaltung der Erfindung wird nachfolgend mit Bezug auf die Figuren näher beschrieben:
- Fig. 1: zeigt eine Windenergieanlage mit mehreren Windsensoren in vier Ebenen in einer Ansicht von der Seite,
- Fig. 2: zeigt eine schematische Draufsicht auf den Turm mit sechs Windsensoren in einer Ebene und
- Fig. 3: zeigt eine schematische Detailansicht-eines Ultraschall-Anemometers mit einem an der Turmwandung befestigten Bügel.

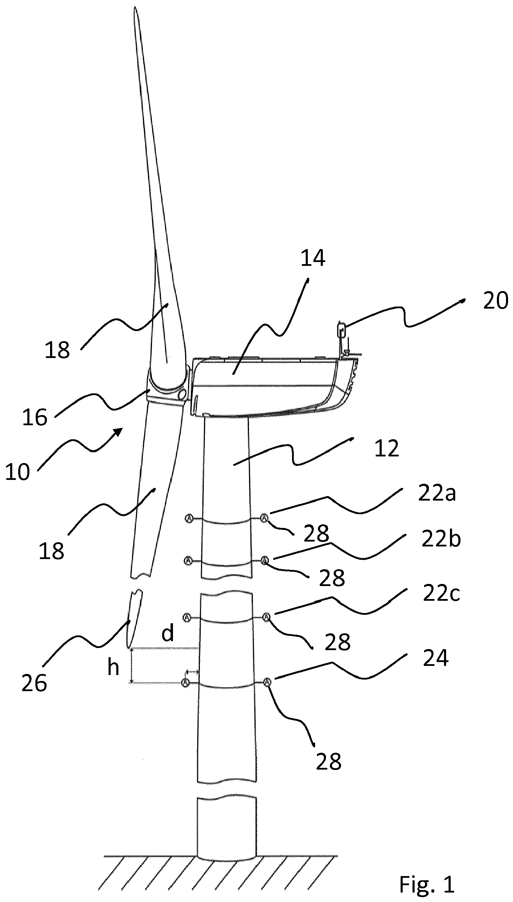

Figur 1 zeigt eine Windenergieanlage 10 mit einem Turm 12, einem Maschinenhaus 14 und einem Rotor 16 mit Rotorblättern 18. Das Maschinenhaus 14 besitzt an seiner vom Rotor 16 fortweisenden Seite eine Messstation 20, die unter anderem die Windgeschwindigkeit und die Windrichtung misst und/oder erfasst.

Entlang dem Turm 12 sind vier Ebenen 22a, b, c, 24 mit Windsensoren 28 in der schematischen Ansicht zu erkennen. Eine Ebene 24 ist unterhalb der Rotorblattspitze 26 eines Rotorblattes 18 angeordnet. Die Rotorblattspitze 26 besitzt einen Rotorblattspitzenabstand d zu dem Turm 12 und endet zwischen der dritten Ebene 22c der oberen Ebenen und der untersten Ebene 24. Die unterste Ebene 24 ist um eine Abstand h tiefer als die Rotorblattspitze 26. Der bevorzugte Abstand h richtet sich nach der Rotorblatt- und/oder der vorgegebenen Turmgeometrie. Anhaltspunkte für einen bevorzugten Abstand h sind mindestens zwei, bevorzugt vier oder fünf und mehr Meter. Durch diesen Abstand wird sichergestellt, dass die von den Windsensoren 28 der untersten Ebene 24 erfassten Winddaten bzw. Ist-Werte nicht wesentlich von Störeinflüssen der Rotorblätter beeinflusst sind.

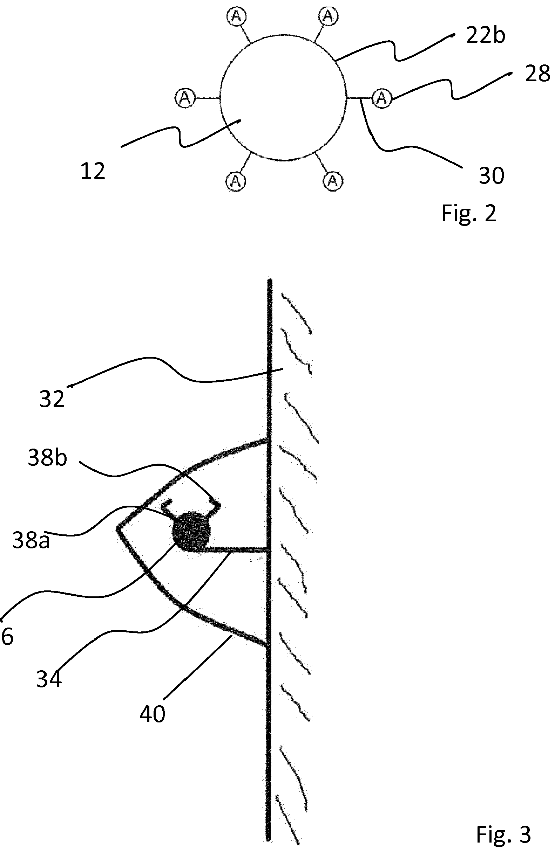

Eine beispielhaft dargestellte Ebene 22b ist in Fig. 2 näher dargestellt. Die Ebene 22b umfasst im Ausführungsbeispiel sechs Windsensoren 28, die gleichmäßig über den Umfang des Turmes 12 verteilt sind. Die Windsensoren 28 sind durch den Buchstaben A als Anemometer gekennzeichnet. In Fig. 2 schematisch dargestellt ist eine Halteeinrichtung 30, die einen Mindestabstand des Windsensors 28 von der Turmwandung 32 vorgibt. Bevorzugt ist der Windsensor 28 10 cm bis 100 cm von der Turmwandung 32 entfernt positioniert.

Der Windsensor 28 ist bevorzugt als ein wartungsfreies Ultraschall-Anemometer ausgebildet. Alternativ können auch optische Messsensoren eingesetzt werden, wie beispielsweise eindimensionale Lasersysteme oder LIDAR-Systeme.

Fig. 3 zeigt eine schematische Ansicht von der Seite mit einer Turmwandung 32, an der eine Halteeinrichtung 34 angebracht ist, die einen Windsensor 28 in Form eines Anemometers 36 mit zwei Antennen 38a, b, nämlich einer Sendeantenne und einer Empfangsantenne zeigt. Das Anemometer 36 ist von einem Schutzbügel 40 umgeben, der sich in Turmlängsrichtung vor dem Anemometer 36 erstreckt und so ein Verhaken eines Seils oder dergleichen an der Halteeinrichtung 34 verhindert. Ein weiterer Schutzbügel 40 kann quer zu dem ersten Schutzbügel 40 in Längsrichtung angeordnet sein (nicht gezeigt).

In der erfindungsgemäßen Ausgestaltung messen die Windsensoren 28 Windgeschwindigkeit und Windrichtung über der Zeit. Bei jedem Rotorblattdurchlauf des Rotorblatts wird eine Windgeschwindigkeit an dem luvseitigen Anemometer induziert. Je größer die Geschwindigkeit an dem Anemometer, desto größer ist der lokale Auftrieb des Rotorblatts an der entsprechenden Radiusposition. Dieser Effekt wird noch verstärkt, da sich die Durchbiegung des Rotorblatts mit zunehmender Windgeschwindigkeit den Abstand zum Turm und den Windsensoren verringert.

Aus den gewonnen Daten kann eine Abschätzung des Windfelds vor der Windenergieanlage erfolgen. Damit sind verschiedene Windparameter wie beispielsweise Windgeschwindigkeit, Windrichtung und Turbulenzintensität genauer und insbesondere lokal bestimmbar. Mit den leeseitigen Windsensoren 28 kann das Windfeld im Windschatten der Windenergieanlage bestimmt werden.

### Bezugszeichenliste

- 10: Windenergieanlage
- 12: Turm
- 14: Maschinenhaus
- 16: Rotor
- 18: Rotorblatt
- 20: Messstation
- 22a, b, c: Ebene
- 24: unterste Ebene
- 26: Rotorblattspitze
- 28: Windsensoren
- 30: Halteeinrichtung
- 32: Turmwandung
- 34: Halteeinrichtung
- 36: Anemometer
- 38a, b: Antenne
- 40: Schutzbügel
- d: Rotorblattspitzenabstand
- h: Abstand
- A: Anemometer

## Patentansprüche

1. Windenergieanlage (10) mit einem Turm (12) und einem drehbar auf dem Turm (12) angeordneten Maschinenhaus (14), das einen drehbaren Rotor (16) mit mehreren Rottorblättern (18) trägt, wobei eine Vielzahl von Windsensoren (28) an dem Turm (12) angeordnet ist, **dadurch gekennzeichnet, dass** die Windsensoren (28) ringförmig in mindestens zwei beabstandeten Ebenen (22, 24) an dem Turm (12) angeordnet sind, die jeweils eine unterschiedliche Höhe an dem Turm (12) aufweisen, wobei in den Ebenen (22, 24) jeweils mindestens drei über den Umfang des Turmes (12), verteilt angeordnete Windsensoren (28) vorgesehen sind.

2. Windenergieanlage (10) nach Anspruch 1, **dadurch gekennzeichnet, dass** die Windsensoren (28) einer unteren Ebene (24) in einer Höhe angeordnet sind, die außerhalb eines Rotorblattdurchlaufs liegt.

3. Windenergieanlage (10) nach Anspruch 2, **dadurch gekennzeichnet, dass** weitere Windsensoren (28) in wenigstens drei beabstandeten oberen Ebenen (22a, 22b, 22c) innerhalb des Rotorblattdurchlaufs am Turm (12) angeordnet sind und mit den Windsensoren (28) der unteren Ebene (24) außerhalb des Rotorblattdurchlaufs ein Windsensor-Array bilden.

4. Windenergieanlange (10) nach einem der Ansprüche 1 bis 3, **dadurch gekennzeichnet, dass** mindestens einer der Windsensoren (28) als optischer Sensor zur Messung von rückgestreuten elektromagnetischen Wellen ausgebildet ist.

5. Windenergieanlage (10) nach einem der Ansprüche 1 bis 4, **dadurch gekennzeichnet, dass** mindestens einer der Windsensoren (28) als ein Ultraschall-Anemometer (A) ausgebildet ist.

6. Windenergieanlage (10) nach einem der Ansprüche 1 bis 5, **dadurch gekennzeichnet, dass** die Windsensoren (28) jeweils einen lokalen Ist-Wert der Windgeschwindigkeit erfassen und für eine Auswerteeinheit der Windenergieanlage bereitstellen, wobei die Auswerteeinheit ausgebildet und eingerichtet ist, eine Vielzahl von lokalen Ist-Werten der Windgeschwindigkeit, jeweils mit ihren zugeordneten Raumkoordinaten zu speichern.

7. Windenergieanlage (10) nach Anspruch 6, **dadurch gekennzeichnet, dass** die Auswerteeinheit ausgebildet und eingerichtet ist, aus den lokalen Ist-Werten der Windgeschwindigkeiten und ihren jeweils zugeordneten Raumkoordinaten eine lokale Windrichtung zu bestimmen.

8. Windenergieanlage (10) nach Anspruch 7, **dadurch gekennzeichnet, dass** die Auswerteeinheit ausgebildet und eingerichtet ist, aus den lokalen Ist-Werten der Windgeschwindigkeiten und ihren zugeordneten Raumkoordinaten Windfeldparameter für ein luv- und/oder leeseitiges Windfeld der Windenergieanlage (10) zu ermitteln.

9. Windenergieanlage (10) nach Anspruch 7 oder 8, **dadurch gekennzeichnet, dass** die Auswerteeinheit ausgebildet und eingerichtet ist, aus den lokalen Ist-Werten der Windgeschwindigkeiten eine aerodynamische Unwucht der Rotorblätter (18) festzustellen.

10. Windenergieanlage (10) nach einem der vorangehenden Ansprüche, **dadurch gekennzeichnet, dass** die Windsensoren (28) ausgebildet und eingerichtet sind, ihre gemessenen Werte drahtlos in das Innere des Turms (12) zu der Auswerteeinheit zu übertragen.

11. Windenergieanlage (10) nach einem der vorangehenden Ansprüche, **dadurch gekennzeichnet, dass** mindestens einer der Windsensoren (28) durch eine Halteeinrichtung (34) in einem vorbestimmten Abstand zu einer Turmaußenwand an dieser gehaltert ist und ein den Windsensor überspannender Schutzbügel (40) an dem Turm (12) oder der Halteeinrichtung (34) befestigt ist.

12. Windenergieanlage (10) nach Anspruch 11, **dadurch gekennzeichnet, dass** die Windsensoren (28) in einer der Ebenen (22, 24) mit oder ohne ihre jeweilige Halteeinrichtung (34) mittels eines Spannelements an dem Turm (12) gehalten sind.

13. Windenergieanlage (10) nach Anspruch 11 oder 12, **dadurch gekennzeichnet, dass** die Halteeinrichtung (34) der Windsensoren (28) in wenigstens einer der Ebenen (22, 24) durch Spannmagnete an der Turmaußenwand gehalten sind.

14. Windenergieanlage (10) nach einem der Ansprüche 11 bis 13, **dadurch gekennzeichnet, dass** die Halteeinrichtung (34) der Windsensoren (28) in wenigstens einer Ebene (22, 24) mit der Turmaußenwand verklebt sind.

15. Windenergieanlage (10) nach einem der Ansprüche 11 bis 14, **dadurch gekennzeichnet, dass** der Turm (12) in Turmsektionen unterteilt ist, die über Flanschverbindungen miteinander verbunden sind, und dass die Halteeinrichtungen (34) der Windsensoren (28) in wenigstens einer Ebene (22, 24) in Höhe einer der Flanschverbindungen angebracht, insbesondere verschraubt sind.

16. Windenergieanlage (10) nach einem der vorangehenden Ansprüche, **dadurch gekennzeichnet, dass** mindestens eine der Ebenen (22, 24) horizontal verläuft.

17. Windpark mit mindestens einer Windenergieanlage (10) nach einem der vorangehenden Ansprüche, **dadurch gekennzeichnet, dass** eine Windparksteuerung vorgesehen ist, die mit der Auswerteeinheit der oder jeder Windenergieanlage (10) in zur Übermittlung der lokalen Ist-Werte der Windgeschwindigkeiten der Verbindung steht.
